# EUROPEAN PATENT APPLICATION

(11) **EP 4 708 592 A1**
(43) Date of publication of application: **11.03.2026**
(21) Application number: 24198316.2
(22) Date of filing: 04.09.2024
(51) Int. Cl.: H02B 1/00, H02B 13/00, H02J 3/28, H02J 3/32

(54) **HIGH VOLTAGE DIRECT CURRENT (HVDC) PLANT ARRANGEMENT**

(71) Applicant: Hitachi Energy Ltd, 8050 Zürich (CH)
(72) Inventor: Gohil, Ghanshyamsinh, Apex, 27502 (US); Dijkhuizen, Frans, 726 31 Skultuna (SE); Sandin, Björn, 771 60 Ludvika (SE); Sandin, Jonas, 771 80 Ludvika (SE); Zala, Nirmal, 771 32 Ludvika (SE)
(74) Representative: AWA Sweden AB

(57) **Abstract**

A high voltage direct current, HVDC, plant arrangement (100, 300, 400, 500, 600, 700) is provided. The high voltage direct current, HVDC, plant arrangement comprises at least one HVDC energy storage system (102, 102'). The at least one HVDC energy storage system comprises a plurality of energy storage blocks (104), connected in series. Each energy storage block comprises a power electronic building block, PEBB, (106) an energy storage unit (108), and a primary support structure (110). The energy storage unit is connected to the power electronic building block. The primary support structure comprises one or more insulators (112). The primary support structure supports the energy storage unit.

## Description

### Technical field

The present invention generally relates to the field of high voltage equipment support structures. In particular, it relates to an energy storage supporting device for a high voltage direct current, HVDC, transmission system.

### Background

Existing energy/power systems have been operating robustly and reliably mainly because most power plants at present are based on traditional synchronous generators, which provide energy buffers through their natural mechanical rotating mass, i.e., inertia. However, as interest in renewable energy increases, many traditional power plants are being replaced by renewable energy sources, such as, wind and solar power. These renewable energy sources use power electronic converters to transmit generated energy into the power systems, unlike traditional power plants. Power electronic converters have different characteristics compared to traditional synchronous generators. Consequently, as more traditional power plants are replaced by renewable energy sources, the different characteristics of these renewable energy sources will impact the stability of energy/power systems. This impact will present significant challenges in maintaining the stability of the energy/power systems and recovering from faults and/or disturbances within the energy/power systems. The natural stabilizing capabilities traditionally provided by synchronous generator, within the energy/power systems, will need to be provided by other means in the future. In the light of the above, there is a need for energy/power support systems that can enhance the stability of energy/power systems.

### Summary

Thus, it would be advantageous to achieve an arrangement that overcomes, or at least alleviates, the above-mentioned drawbacks. In particular, it would be desirable to improve the stability of energy/power systems. This can be achieved by employing an appropriate high voltage direct current, HVDC, plant arrangement, comprising an HVDC energy storage system and a support structure that enhances the stabilization of energy/power systems. To better address one or more of these concerns, a high voltage direct current, HVDC, plant arrangement for enabling improved stability, having the features defined in the independent claim is provided. Preferable embodiments are defined in the dependent claims.

The high voltage direct current, HVDC, plant arrangement is designed to enhance the stability and efficiency of the energy/power system by providing a reliable energy backup and smoothing out fluctuations in the power supply. The energy storage system comprises various components, including but not limited to, capacitors, batteries, and control units, which work together to ensure seamless operation even during peak load times or unexpected disturbances in power grid.

Hence, according to a first aspect, a high voltage direct current, HVDC, plant arrangement is provided. The high voltage direct current, HVDC, plant arrangement comprises at least one HVDC energy storage system. The at least one HVDC energy storage system comprises a plurality of energy storage blocks, connected in series. Each energy storage block comprises a power electronic building block, PEBB, an energy storage unit, and a primary support structure. The energy storage unit is connected to the power electronic building block. The primary support structure comprises one or more insulators. The primary support structure supports the energy storage unit.

An advantage associated with the claimed high voltage direct current, HVDC, plant arrangement is that the stability is improved by integrating the energy storage unit and the power electronic building block, PEBB, in each of the plurality of energy storage blocks connected in series. Further, the primary support structure supporting the energy storage unit provides necessary insulation to the energy storage blocks that further improves the stability of the high voltage direct current, HVDC, plant arrangement.

The energy storge unit may comprise super capacitors, super batteries, or a combination thereof. A person skilled in the art would understand that the energy storge unit may also be any other unit which stores energy, other than that mentioned earlier, for example, capacitors, batteries, or a combination thereof.

The primary support structure may be a mechanical structure. The primary support structure may provide mechanical support to the energy storage unit. The primary support structure may insulate the energy storage unit from the ground. The primary support structure may further provide mechanical support to the energy storage blocks. The primary support structure may insulate the energy storage blocks from the ground.

The power electronic building block, PEBB, may comprise a switching unit. The PEBB may enable the conversion and control of input power.

The energy storage unit may comprise an energy storage module. The energy storage unit may comprise several interconnected low-level energy storage modules, e.g. super capacitor modules, or battery modules. Each energy storage module may further comprise several energy storage cells, e.g. super capacitor cells or electrochemical/battery cells.

The storage module may comprise at least one of a capacitor, a super-capacitor, a battery, and a super-battery. A person skilled in the art would understand that the storage module could also include any other energy storage device known in the technical field.

The HVDC energy storage system may further comprise a platform. The primary support structure may be placed on the platform. The primary support structure when placed on the platform may be elevated from the ground. The platform may provide insulation from the ground. The platform may further provide mechanical support and stability to the primary support structure.

The platform may typically be formed of metallic material. Each energy storage block may have voltage insulation from the platform.

The HVDC energy storage system may further comprise a secondary support structure. The secondary support structure may comprise one or more secondary insulators. The platform may be elevated from the ground using the secondary support structure. The secondary support structure may provide insulation from the ground. The secondary support structure may further provide mechanical support and stability to the platform and the primary support structure.

The platform may be placed on the secondary support structure. The secondary support structure elevates the platform from the ground. In case of several HVDC energy storage systems, the secondary support structure may elevate the platform to the same height for all HVDC energy storage systems. Alternatively, the secondary support structure may elevate the platform to a different height for each of the HVDC energy storage systems.

The height of the one or more secondary insulators may depend on the total accumulated voltage build-up in the HVDC energy storage system.

The secondary insulators in the secondary support structure may have different heights, depending on the accumulated voltage build-up for each of the respective at least one HVDC energy storage systems. In other words, the height of the one or more secondary insulators may depend on the number of serialized energy storage blocks in the HVDC energy storage system. The different heights of the one or more secondary insulators or the secondary support structure may be beneficial in terms of the cost of the HVDC plant arrangement. Additionally, the different heights of the secondary support structure may enhance the accessibility and ease of maintenance for the HVDC energy storage system.

Despite the different heights mentioned above, a person skilled in the art would understand that the secondary support structure or the secondary insulators may have same height across different HVDC energy storage systems.

The high voltage direct current, HVDC, plant arrangement may further comprise one or more housings. The size of the one or more housings may vary. The size may be based on different insulation clearance distance requirements. For example, the different heights of the one or more secondary insulators in the secondary support structure may necessitate varying housing sizes.

Each housing may enclose at least the series connected plurality of energy storage blocks in the respective HVDC energy storage system. Each housing may be considered as a high voltage hall or building or container. Each housing may vary in size.

Each housing may enclose the respective HVDC energy storage system. Each housing may provide insulation for the respective HVDC energy storage system.

The HVDC plant arrangement may further comprise one or more housings, wherein each housing may enclose the series connected plurality of energy storage blocks, the platform and the secondary support structure of a respective HVDC energy storage system. Each housing may provide insulation for the respective plurality of energy storage blocks, the platform and the secondary support structure.

The HVDC plant arrangement may further comprise one or more housings, wherein the secondary support structure may support the housing, which encloses the respective HVDC energy storage system.

The platform may or may not be enclosed in the housing.

The high voltage direct current, HVDC, plant arrangement may further comprise a dc chopper breaking resistor. The dc chopper breaking resistor may enable dc chopper functionality of the HVDC plant arrangement.

The dc chopper breaking resistor may either be connected to a high voltage end or a low voltage end of the series connected plurality of energy storage blocks.

The physical location of the dc chopper breaking resistor may play an important role for the HVDC energy storage system insulation coordination.

If the dc chopper breaking resistor is connected to an energy storage block of the plurality of energy storage blocks on ground potential or minimum potential or low voltage end of the series connected plurality of energy storage blocks, then all the secondary support structure or the secondary insulators may have the same height to the ground for the different HVDC energy storage systems.

An electrical consideration of having the dc chopper breaking resistor at ground potential and the same height secondary support structure is that, when the DC chopper breaking resistor is configured to operate the HVDC plant arrangement in DC chopper functionality and connected to a high voltage DC pole voltage to absorb the surplus energy on the DC transmission link, the voltage potentials of the platforms of the plurality of energy storage blocks with respect to ground may rise quickly. This voltage rise may occur in less than one millisecond or a few milliseconds.

Alternatively, when the dc chopper breaking resistor is connected to an energy storage block of the plurality of energy storage blocks on maximum potential or high voltage end of the series connected plurality of energy storage blocks then the secondary support structure or the secondary insulators may have different heights to the ground for the different HVDC energy storage systems.

The platform may be arranged to hang on a mechanical structure.

The hanging platform may be beneficial particularly during seismic events, as the hanging mechanical structures allow for deflective movements. Additionally, the deflective movements may be damped, if required, by utilizing mechanical dampers with the mechanical structure.

### Brief description of the drawings

These and other aspects will now be described in more detail with reference to the appended drawings showing embodiments.
Figure 1 shows a high voltage direct current, HVDC, plant arrangement comprising at least one HVDC energy storage system with an integrated power electronic building block, PEBB, and an energy storage unit;
Figure 2 shows a simplified version of a high voltage direct current, HVDC, plant arrangement comprising a plurality of HVDC energy storage systems;
Figure 3 shows another simplified version of a high voltage direct current, HVDC, plant arrangement comprising a plurality of HVDC energy storage systems, each housed in a respective housing;
Figures 4a and 4b, show another simplified version of a high voltage direct current, HVDC, plant arrangement comprising a plurality of HVDC energy storage systems, each housed in a respective housing mounted on a respective secondary support structure;
Figure 5 shows an alternative embodiment of the high voltage direct current, HVDC, plant arrangement comprising a plurality of HVDC energy storage systems, each housed in a respective housing with the respective secondary support structure of same height;
Figure 6 shows an alternative embodiment of the high voltage direct current, HVDC, plant arrangement comprising a plurality of HVDC energy storage systems, each housed in a respective housing with the respective secondary support structure of different heights;
Figure 7 shows another simplified version of a high voltage direct current, HVDC, plant arrangement comprising a plurality of HVDC energy storage systems, each housed in a respective housing mounted on a respective secondary support structure of different heights;

All the figures are schematic, not necessarily to scale, and generally only show parts which are necessary in order to elucidate the embodiments, wherein other parts may be omitted or merely suggested. Like reference numerals refer to like elements throughout the description.

### Detailed description

The present aspects will now be described more fully hereinafter with reference to the accompanying drawings, in which currently preferred embodiments are shown. This invention may, however, be embodied in many different forms and should not be construed as limited to the embodiments set forth herein; rather, these embodiments are provided for thoroughness and completeness, and fully convey the scope of the present aspects to those skilled in art.

The invention may be applied, for example, to high voltage direct current, HVDC, energy/power systems. Additionally, the invention may also be applicable to energy/power systems incorporating renewable energy sources.

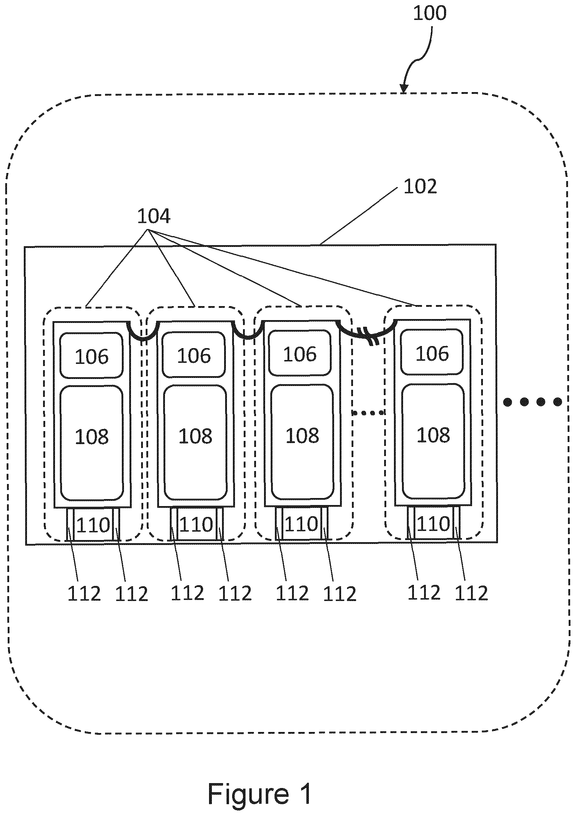

Figure 1 schematically illustrates an embodiment of a high voltage direct current, HVDC, plant arrangement 100. The high voltage direct current, HVDC, plant arrangement 100 comprises at least one HVDC energy storage system 102. The high voltage direct current, HVDC, plant arrangement 100 may comprise a plurality of HVDC energy storage systems 102. Each HVDC energy storage system 102 comprises a plurality of energy storage blocks 104, connected in series. Each energy storage block 104 comprises an integrated power electronic building block, PEBB, 106, an energy storage unit 108, and a primary support structure 110. The energy storge unit 108 may comprise super capacitors, super batteries, or a combination thereof. The power electronic building block, PEBB, 106 may comprise a switching unit. The PEBB 106 may enable the conversion and control of input power. The energy storage unit 108 is connected to the power electronic building block 106. The primary support structure 110 comprises one or more insulators 112. The primary support structure 110 may be a mechanical structure. The primary support structure 110 supports the energy storage unit 108. The primary support structure 110 may insulate the energy storage unit 108 from the ground. The primary support structures 110 may further provide mechanical support to the corresponding energy storage blocks 104. The primary support structures 110 may insulate the corresponding energy storage blocks 104 from the ground.

The energy storage unit 108 may comprise an energy storage module. The energy storage unit 108 may comprise several interconnected low-level energy storage modules, e.g. super capacitor modules, or super-battery modules. Each energy storage module may further comprise several energy storage cells, e.g. super capacitor cells or electrochemical/battery cells. A person skilled in the art would understand that the storage module could also include any other energy storage device known in the technical filed.

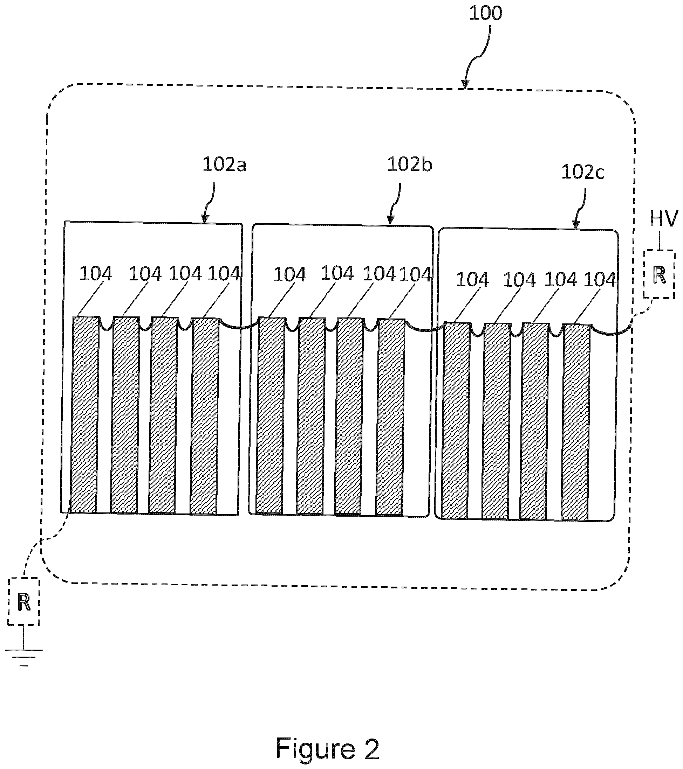

Figure 2 shows a simplified version of above embodiment of the high voltage direct current, HVDC, plant arrangement comprising a plurality of HVDC energy storage systems 102a, 102b, 102c, connected in series. The plurality of HVDC energy storage systems 102a, 102b, 102c are similar to those disclosed with reference to Figure 1. The high voltage direct current, HVDC, plant arrangement 100 may further be configured to operate in dc chopper functionality by utilizing a dc chopper breaking resistor R. The dc chopper breaking resistor R may either be connected to a high voltage end, HV, or a low voltage end of the series connected plurality of energy storage blocks 104.

The physical location of the dc chopper breaking resistor R may play an important role for the insulation coordination of the HVDC energy storage systems 102. The dc chopper breaking resistor R may be connected to an energy storage block of the plurality of energy storage blocks 104 on ground potential or minimum potential or low voltage end of the series connected plurality of energy storage blocks 104 (shown in dashed lines connected to the HVDC energy storage system 102a in Figure 2). Alternatively, the dc chopper breaking resistor R may be connected to an energy storage block of the plurality of energy storage blocks 104 on maximum potential or high voltage, HV, end of the series connected plurality of energy storage blocks 104 (shown by dashed lines connected to the HVDC energy storage system 102c in Figure 2). The dc chopper breaking resistor R may be configured to connect to any of the embodiments described later in the description.

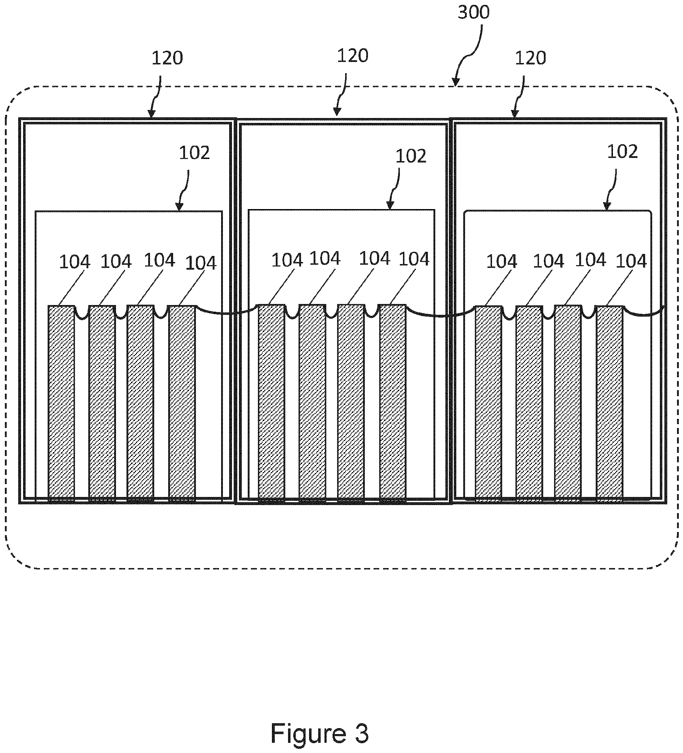

Figure 3 illustrates another embodiment of the high voltage direct current, HVDC, plant arrangement 300, comprising a plurality of HVDC energy storage systems 102, each housed in a respective housing 120. Each housing 120 may be considered as a high voltage hall. While the housings 120 are typically shown to be of same size in the figure, a person skilled in the art would understand that the housings 120 may also vary in size. Each housing 120 encloses the respective HVDC energy storage system 102. Each housing 120 may provide insulation for the respective HVDC energy storage system 102. The plurality of HVDC energy storage systems 102 are similar to those disclosed with reference to Figures 1 and 2.

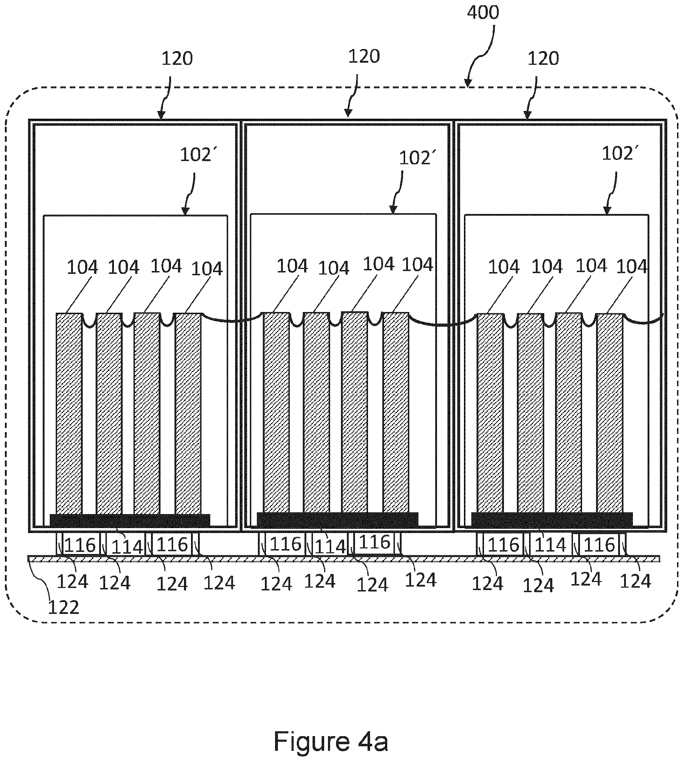

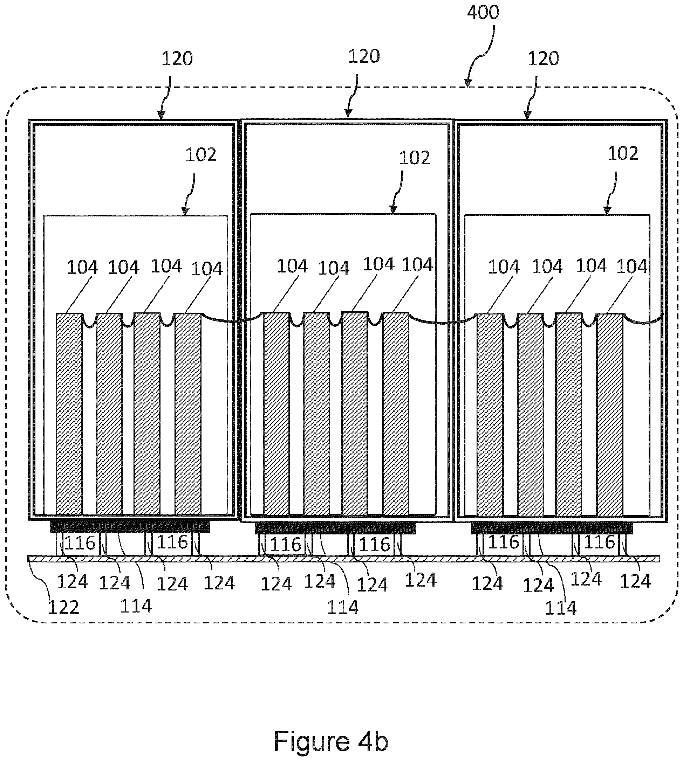

Figure 4a shows another embodiment of the high voltage direct current, HVDC, plant arrangement 400 comprising the plurality of HVDC energy storage systems 102', each housed in the respective housing 120 mounted on a respective secondary support structure 116. The secondary support structure 116 comprises one or more secondary insulators 124. The secondary support structures 116 elevate the respective HVDC energy storage systems 102 from ground 122. The HVDC energy storage systems 102' may further comprise a platform 114. Alternatively, the platform 114 may be independent from the HVDC energy storage systems 102, as shown in Figure 4b. The platform 114 is supported by the secondary support structure 116. At least one of the housing 120, the platform 114 and the secondary support structure 116 may provide insulation to the HVDC energy storage systems 102 from the ground 122. Furthermore, the housing 120, the platform 114 and the secondary support structure 116 may provide mechanical support and stability to the HVDC energy storage systems 102, 102'. The secondary support structure 116 for each of the HVDC energy storage systems 102. 102' have the same height with respect to the ground 122.

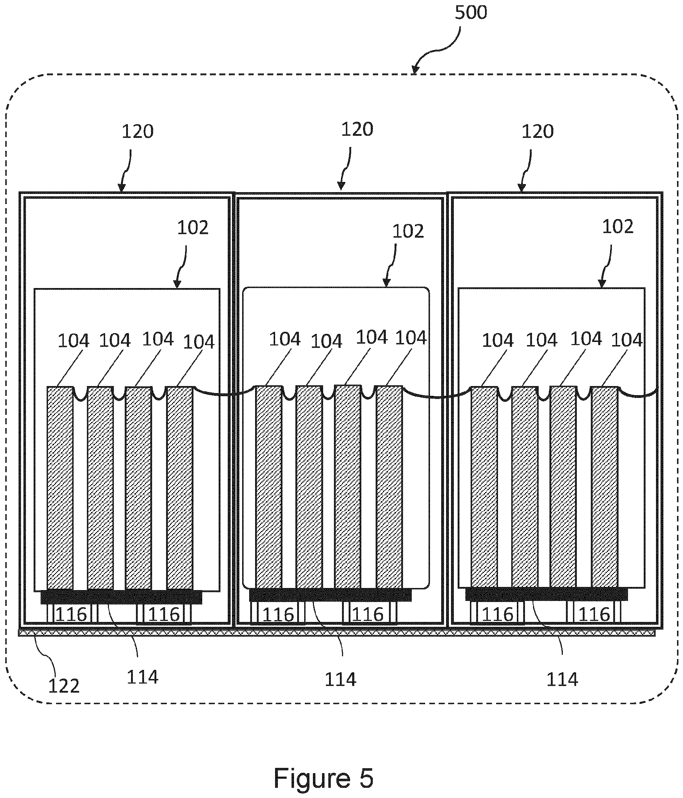

An alternative embodiment of the high voltage direct current, HVDC, plant arrangement 500, is illustrated in Figure 5. The high voltage direct current, HVDC, plant arrangement 500 comprises the plurality of HVDC energy storage systems 102, each housed in the respective housing 120. Each of the plurality of HVDC energy storage systems 102 are mounted on a respective secondary support structure 116. The housing 120 also encloses the respective platform 114 and the secondary support structure 116. The embodiment illustrated in Figure 5 differs from that illustrated using Figures 4a and 4b in that the respective housing 120 encloses both the respective platform 114 and also the secondary support structure 116.

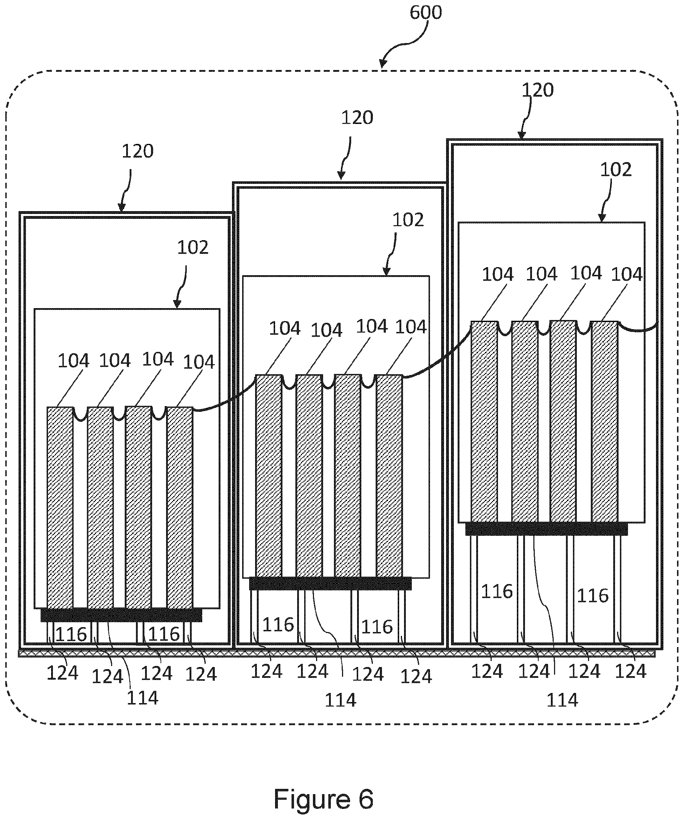

Another alternative embodiment of the high voltage direct current, HVDC, plant arrangement 600, is illustrated in Figure 6. The high voltage direct current, HVDC, plant arrangement 600 comprises a plurality of HVDC energy storage systems 102, each mounted on a respective secondary support structure 116 and housed in a respective housing 120. In contrast to the embodiment illustrated in Figure 5, the embodiment illustrated using Figure 6 provides the secondary support structure 116 with varying heights for each of the plurality of HVDC energy storage systems 102. The one or more secondary insulators 124 of the secondary support structure 116 may have different height depending on the total accumulated voltage build-up in the respective HVDC energy storage system 102. At a lower voltage the insulation requirement is lower than at a higher voltage. The different heights of the one or more secondary insulators or the secondary support structure may be beneficial in terms of the cost of the HVDC plant arrangement. Additionally, the accessibility of the HVDC energy storage system may improve and be easier with different heights of the secondary support structure.

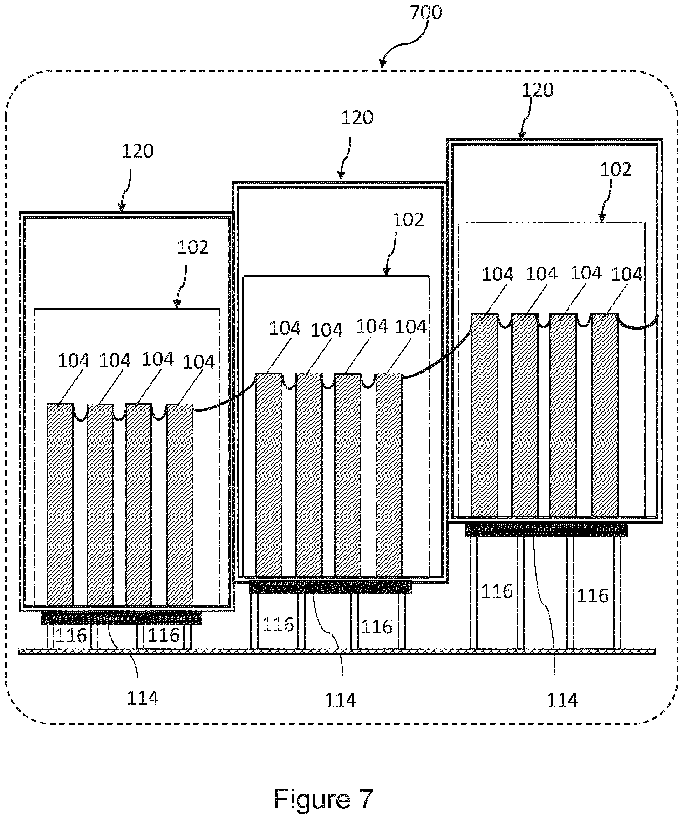

Figure 7 shows yet another embodiment of the high voltage direct current, HVDC, plant arrangement 700 comprising a plurality of HVDC energy storage systems 102, each housed in a respective housing 120 mounted on a respective secondary support structure 116. In contrast to the embodiment illustrated in Figure 4b, the embodiment illustrated using Figure 7 provides the secondary support structure 116 with varying heights for each of the plurality of HVDC energy storage systems 102.

As stated earlier, all different embodiments illustrated above may be configured to be connected to the dc chopper breaking resistor R either to a high voltage (HV) end or a low voltage end of the series connected plurality of energy storage blocks 104. The physical location of the dc chopper breaking resistor R may play an important role for the HVDC energy storage system insulation coordination.

If the dc chopper breaking resistor R is connected to an energy storage block of the plurality of energy storage blocks on ground potential or minimum potential or low voltage end of the series connected plurality of energy storage blocks 104, then all the secondary support structure 116 or the secondary insulators may have the same height to the ground 122 for the different HVDC energy storage systems, as illustrated in Figures 4a, 4b and 5.

An electrical consideration of having the dc chopper breaking resistor R at ground potential and the same height secondary support structure is that, when the DC chopper breaking resistor R is configured to operate the HVDC plant arrangement in DC chopper functionality and connected to a high voltage DC pole voltage to absorb the surplus energy on the DC transmission link, the voltage potentials of the platforms of the plurality of energy storage blocks 104 with respect to ground 122 may rise quickly. This voltage rise may occur in less than one millisecond or a few milliseconds.

Alternatively, when the dc chopper breaking resistor R is connected to an energy storage block of the plurality of energy storage blocks 104 on maximum potential or high voltage end of the series connected plurality of energy storage blocks 104 then the secondary support structure 116 or the secondary insulators 124 may have different heights to the ground 122 for the different HVDC energy storage systems 120, as illustrated in Figures 6 and 7. The different heights of the one or more secondary insulators 124 or the secondary support structure 116 may be beneficial in terms of the cost of the HVDC plant arrangement 100. Additionally, the accessibility of the HVDC energy storage system 102 may improve and be easier with different heights of the secondary support structure.

While the present disclosure has been illustrated and described in detail in the drawings and foregoing description, such illustration and description are to be considered illustrative or exemplary and not restrictive.

The person skilled in the art realizes that the present invention by no means is limited to the preferred embodiments described above. On the contrary, many modifications and variations are possible within the scope of the appended claims. For example, the HVDC energy storage systems 102 in the embodiments presented in Figures 5, 6 and 7 may be replaced by the HVDC energy storage systems 102' in Figure 4a, where the platform 114 is integrated in the HVDC energy storage systems 102'. Furthermore, the platform 114 depicted in Figures 5, 6 and 7 may be instead integrated in the HVDC energy storage systems 102, similar to the configuration of the HVDC energy storage systems 102' illustrated in Figure 4a. Alternatively, an additional platform may be integrated into the HVDC energy storage systems 102, in addition to the one already shown in Figures 5, 6 and 7. Thus, the embodiments presented in the disclosure are for exemplary purpose and should not be construed as limiting the scope. In the claims, the word "comprising" does not exclude other elements or steps, and the indefinite article "a" or "an" does not exclude a plurality. The mere fact that certain features are recited in mutually different dependent claims does not indicate that a combination of these features cannot be used to advantage. Any reference signs in the claims should not be construed as limiting the scope.

## Claims

1. A high voltage direct current, HVDC, plant arrangement (100, 300, 400, 500, 600, 700) comprising:
at least one HVDC energy storage system (102, 102') comprising:
a plurality of energy storage blocks (104), connected in series, wherein each energy storage block comprises:
a power electronic building block, PEBB, (106);
an energy storage unit (108), wherein the energy storage unit is connected to the power electronic building block; and
a primary support structure (110), wherein the primary support structure comprises one or more insulators (112), and
the primary support structure supports the energy storage unit.

2. The HVDC plant arrangement according to claim 1, wherein the power electronic building block, PEBB, comprises a switching unit.

3. The HVDC plant arrangement according to any one of claims 1 and 2, wherein the energy storage unit comprises an energy storage module.

4. The HVDC plant arrangement according to claim 3, wherein the storage module comprises at least one of a capacitor, a super-capacitor, a battery, and a super-battery.

5. The HVDC plant arrangement according to any one of claims 1-4, wherein the HVDC energy storage system further comprises a platform 114, wherein the primary support structure is placed on the platform.

6. The HVDC plant arrangement according to claim 5, wherein the HVDC energy storage system further comprises a secondary support structure 116, wherein the secondary support structure comprises one or more secondary insulators (124).

7. The HVDC plant arrangement according to claim 6, wherein the platform is placed on the secondary support structure.

8. The HVDC plant arrangement according to claim 6 or 7, wherein a height of the one or more secondary insulators is dependent on the total accumulated voltage build-up in the HVDC energy storage system.

9. The HVDC plant arrangement according to any one of claims 1-8, further comprising one or more housings (120).

10. The HVDC plant arrangement according to claim 9, wherein each housing encloses at least the series connected plurality of energy storage blocks in the respective HVDC energy storage system.

11. The HVDC plant arrangement according to any one of claims 6-8, further comprising one or more housings, wherein each housing encloses the series connected plurality of energy storage blocks, the platform, and the secondary support structure of a respective HVDC energy storage system.

12. The HVDC plant arrangement according to any one of claims 6-8, further comprising one or more housings wherein the secondary support structure supports the housing, which encloses the respective HVDC energy storage system.

13. The HVDC plant arrangement according to any one of claims 1-12, further comprising a dc chopper breaking resistor.

14. The HVDC plant arrangement according to claim 13, wherein the dc chopper breaking resistor is either connected to a high voltage end or a low voltage end of the series connected plurality of energy storage blocks.

15. The HVDC plant arrangement according to claim 5, wherein the platform is hanging on a mechanical structure.
